# EUROPÄISCHE PATENTANMELDUNG

(11) **EP 0 928 863 A2**
(43) Veröffentlichungstag der Anmeldung: **14.07.1999**
(21) Anmeldenummer: 99100561.2
(22) Anmeldetag: 13.01.1999
(51) Int. Cl.: E04F 13/08

(54) **Einrichtung zum Einleiten einer Kraft in ein Element**

(30) Priorität: 13.01.1998 DE 19800896
(71) Anmelder: Deutsches Zentrum für Luft- und Raumfahrt e.V., 53175 Bonn (DE)
(72) Erfinder: Schütze, Rainer Dr., 38110 Braunschweig (DE)
(74) Vertreter: Einsel, Martin, Dipl.-Phys.

(57) **Zusammenfassung**

Bei einer Einrichtung einem ersten, insbesondere mehrschichtigen Element sind ein das erste Element (10) im wesentlichen vollständig durchdringendes zweites drucksteifes Element (20), ein Elementenpaar (30) und Verbindungselemente (40, 41) vorgesehen. Das zweite Element (20) ist zwischen dem Elementenpaar (30) angeordnet. Die Verbindungselemente (40, 41) sind zwischen dem Elementenpaar (30) und im Bereich des zweiten Elementes (20) angeordnet. Die beiden Elemente des Elementenpaares liegen mit Teilflächen jeweils auf entgegengesetzten Oberflächen des ersten Elementes (10) auf oder sind benachbart zu dessen Oberfläche angeordnet. Die Verbindungselemente sind faden- oder bandförmig. Die Kraft kann über das zweite Element (20) in das erste Element (10) eingeleitet werden.

## Beschreibung

Die Erfindung betrifft eine Einrichtung mit einem ersten, insbesondere mehrschichtigen Element, bei dem ein das erste Element im wesentlichen vollständig durchdringendes zweites drucksteifes Element und ein Elementenpaar vorgesehen sind, bei dem das zweite Element zwischen dem Elementenpaar angeordnet ist.

Aus der GB 22 14 594 A ist ein Abstandshalter bekannt, der eine Ausnehmung innerhalb einer geschlossenen Struktur überbrücken soll. Er verhindert, daß eine von außen an der Struktur angreifende Kraft beispielsweise einer Schrauben-/Mutter-Verbindung die Struktur zusammenquetscht und verbessert zugleich die Schraubverbindung, mit der ein weiteres, außen an der geschlossenen Struktur anmontiertes Element gehalten wird. Gedacht ist diese Struktur vor allem zur Montage schwerer Teile an weniger stabile Elemente eines Kraftfahrzeugunterbodens.

In ähnlicher Form stabilisiert in der US-PS 4,101,232 ein Befestigungsstützensystem einen mehretagigen Unterboden für Hochzeitstorten, die aufgrund ihres im Verhältnis zum Unterboden relativ hohen Gewichtes sonst dazu neigen, diese Unter- und Zwischenböden zu kippen oder ihre Stabilität zu gefährden.

In der DE 38 41 499 A1 schließlich wird eine Spannvorrichtung vorgeschlagen, mit der die Kraft einer Welle, die durch eine Nabe geführt ist, auf diese Nabe im Bedarfsfall übertragen werden kann.

Diese vorbekannten Einrichtungen sind jedoch durchweg ungeeignet, beliebige Kräfte von außen in ein insbesondere mehrschichtiges Element einzuleiten. Zu diesem Zweck ist in der Bautechnik bisher eine Einrichtung bekannt geworden, bei der beispielsweise Schrauben durch das Element, insbesondere innerhalb einer Hülse durchgesteckt oder darin eingeschraubt werden.

Die Schraube kann dann in ein weiteres Element eingeschraubt werden, mit dem das erste Element verbunden werden soll. Eine von dem zweiten Element ausgehende Kraft kann dadurch über die Schraube in das erste Element eingeleitet werden.

Eine weitere bekannte Maßnahme ist, hochbelastbare Krafteinleitungselemente in Faserverbundstrukturen einzubauen, wobei sich dabei häufig große Probleme aufgrund der unterschiedlichen Materialien von Krafteinleitungselementen, welche im allgemeinen metallisch, insbesondere aus Aluminium sind, und der Faserverbundstruktur ergeben. Bekanntermaßen werden die Krafteinleitungselemente in die Faserverbundstrukturen eingeklebt, wobei sich Probleme durch die Inkompatibilität der beiden unterschiedlichen Werkstoffe im Bereich der Verklebungen ergeben. Der metallische Werkstoff und der Faserverbundwerkstoff weisen nämlich unterschiedliches Wärmeausdehnungsvemalten auf, was besonders deutlich bei kohlefaserverstärktem Kunststoff und Aluminium zutage tritt. Jedoch eignen sich gerade diese beiden Werkstoffe aufgrund ihrer ansonsten hervorragenden gewichtsspezifischen Eigenschaften prinzipiell für hochbelastbare Leichtbaustrukturen besonders gut. Gerade unter Dauerbelastungen, oder dann, wenn von außen Wärmeeinwirkungen eintreten oder diese Wärmeeinwirkungen durch die Belastung entstehen, treten jedoch erhebliche Probleme aufgrund des unterschiedlichen Wärmeausdehnungsvemaltens der beiden Werkstoffe und die dadurch entstehende Inkompatibilität und Ungeeignetheit einer Klebeverbindung auf.

Der Erfindung liegt daher die Aufgabe zugrunde, eine Einrichtung zum Einleiten einer Kraft in ein insbesondere mehrschichtiges Element zu schaffen, welche diese Probleme löst, zugleich eine Gewichtseinsparung gegenüber dem Stand der Technik ermöglicht und nachträglich in das erste Element eingesetzt werden kann.

Die Aufgabe wird mit einer gattungsgemäßen Einrichtung gelöst, bei der Verbindungselement vorgesehen sind, die zwischen dem Elementenpaar und im Bereich innerhalb und/oder außerhalb des zweiten Elementes angeordnet sind, bei der die beiden Elemente des Elementenpaares mit Teilflächen jeweils auf den entgegengesetzten Oberflächen des ersten Elementes aufliegen oder benachbart zu diesen Oberflächen angeordnet sind, bei der die Verbindungselemente faden- oder bandförmig und zwischen dem Elementenpaar verspannbar oder verspannt sind, und bei der die Elemente des Elementenpaares Mittel zum Verbinden mit den Verbindungselementen aufweisen, so daß die Kraft über das zweite Element in das erste Element eingeleitet werden kann.

Dadurch wird eine Einrichtung zum Einleiten einer Kraft in ein erstes Element geschaffen, durch welche alle Belastungen ausschließlich über Formschlußelemente, jedoch nicht mehr über Klebeverbindungen beliebiger Art aufgenommen werden. Die Zuverlässigkeit der Verbindung ist dadurch vorteilhaft nicht von der Qualität der Klebung abhängig.

Als besonders vorteilhaft erweist sich die Möglichkeit, die erfindungsgemäße Einrichtung nachträglich in das erste Element insbesondere eine Sandwichplatte, einzubringen.

Aufgrund des besonders vorteilhaften Vorsehens von verhältnismäßig klein dimensionierten Elementen des Elementenpaares, welche der Krafteinleitung dienen, ergeben sich, insbesondere in Verbindung mit sehr leichten Verbindungselementen, sehr hohe Gewichtseinsparungsmöglichkeiten. Im Unterschied zum Stand der Technik, bei dem besonders lange Schrauben durch die Elemente durchgeführt werden müssen, können besonders vorteilhaft bei der erfindungsgemäßen Einrichtung sehr kurze Schrauben verwendet werden. Auch dies stellt wiederum eine Gewichtseinsparung dar.

Vorzugsweise besteht das zweite Element aus dem gleichen Material wie das erste Element, ebenso die Verbindungselemente. Das Elementenpaar hingegen besteht vorzugsweise aus einem metallischen Material. Besonders bevorzugt kann das Elementenpaar aus zwei metallischen Gewindeelementen bestehen, was bedeutet, daß die Elemente oder zumindest ein Element des Elementenpaares eine Innengewinde-Öffnung aufweist. Alternativ hierzu kann auch eine Durchgangsöffnung vorgesehen sein. Diese Öffnungen bzw. die Innengewinde dienen dem Einfügen der insbesondere kurzen Schrauben zum Befestigen eines weiteren Elementes an einem jeweiligen Element des Elementenpaares. Besonders bevorzugt weist eines der Elemente des Elementenpaares eine so groß dimensionierte Durchgangsöffnung auf, daß ein Kopf einer Befestigungsschraube zum Befestigen des weiteren Elementes an dem ersten Element dort hindurchsteckbar ist. Der Kopf der Befestigungsschraube lagert dann innerhalb des ersten Elementes auf der Innenseite des einen Elementes des Elementenpaares an. Die Elemente des Elementenpaares sind vorzugsweise scheibenförmig und mit einem in das zweite Element, welches insbesondere eine Hülse ist, eingreifbaren und einem auf der Oberfläche des ersten Elementes auflagerbarem Teilstück versehen sind. Dadurch ergibt sich ein formschlüssiger Verbund der Elemente des Elementenpaares mit dem ersten Element im Bereiche von dessen für die Einrichtung zum Einleiten der Kraft darin vorgesehenen Öffnung bzw. Durchgangsbohrung.

Zum Herstellen der Krafteinleitungseinrichtung wird das erste Element zunächst mit der Durchgangsöffnung oder -bohrung versehen. Innerhalb der Durchgangsbohrung in dem ersten Element wird zunächst das zweite drucksteife Element insbesondere in Form einer Hülse, besonders bevorzugt einer Spreizhülse, eingefügt. Die Spreizhülse besteht vorzugsweise aus demselben Material wie das erste Element, insbesondere also aus Faserverbundwerkstoff.

Die Verbindungselemente sind faden- oder bandförmig und zwischen dem Elementenpaar verspannt bzw. verspannbar. Besonders bevorzugt werden als Verbindungselemente Faserschlaufen verwendet. Diese sind mit den Elementen des Elementenpaares durch Mittel zum Verbinden mit den Verbindungselementen verbunden. Die Mittel können vorzugsweise Öffnungen sein, durch welche die Faserschlaufen durchgefädelt werden. Danach werden dann die beiden Elemente des Elementenpaares unter einer Vorspannung gegeneinander verzurrt. Als ein entsprechendes Widerlager für diese Vorspannung dient dabei das zweite drucksteife Element, also insbesondere die Spreizhülse. Beim Einleiten einer Kraft in lediglich eines der beiden Elemente des Elementenpaares wird über die Faserschlaufen als Verbindungselemente die Kraft weitergeleitet in das zweite Element des Elementenpaares. Es ist dadurch vorteilhaft lediglich die Krafteinleitung in eines der beiden Elemente des Elementenpaares erforderlich, wodurch entsprechend zu verwendende Schrauben zum Einleiten der Kraft und Verbinden mit einem weiteren Element kurz sein können. Die Schrauben müssen lediglich so lang sein, daß das weitere Element daran angeschraubt werden kann. Besonders bevorzugt wird also nur eine Deckschicht einer Sandwichplatte als erstes Element, in welches die Kraft eingeleitet werden soll, mit dem weiteren, an dieser zu befestigenden Objekt verbunden. Für die Tragfähigkeit werden jedoch die beiden Deckschichten der Sandwichstruktur, welche über die Faserschlaufen miteinander verbunden sind, herangezogen.

Mit Sandwichplatten können vorteilhaft hohe gewichtsbezogene Biegesteifigkeiten erzielt werden, weswegen Sie zu den besonders wichtigen Strukturelementen des Leichtbaus gehören. Da das Einbringen von Befestigungsmöglichkeiten zur Krafteinleitung sich jedoch bei Sandwichplatten als schwieriger als bei massiven Platten erweist, erweist sich die erfindungsgemäße Möglichkeit, nachträglich, d. h. in eine bereits bestehende Sandwichplatte, sehr leichte und zugleich hochbelastbare Metallelemente (Elementenpaar) einzubringen, als besonders vorteilhaft.

Zur näheren Erläuterung der Erfindung werden im folgenden Ausführungsbeispiele anhand der Zeichnungen beschrieben. Diese zeigen in:
- Figur 1: eine perspektivische Ansicht eines Teilbereichs einer Sandwichplatte mit einer erfindungsgemäßen Einrichtung zum Einleiten einer Kraft und
- Figur 2: eine Schnittansicht durch einen Ausschnitt einer Sandwichplatte mit eingefügter erfindungsgemäßer Einrichtung zum Einleiten einer Kraft.

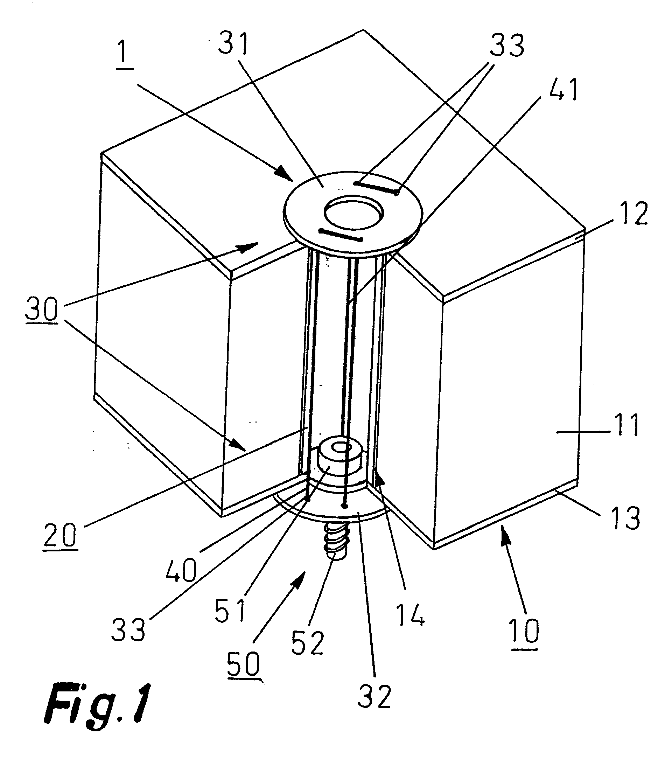

In **Figur 1** ist eine perspektivische Ansicht einer Einrichtung 1 zum Einleiten einer Kraft in ein erstes Element, nämlich eine Sandwichplatte 10 dargestellt. Die Sandwichplatte weist ein Kernelement 11 sowie eine obere Deckschicht 12 und eine untere Deckschicht 13 auf. Zudem ist die Sandwichplatte 10 mit einer Durchgangsöffnung 14 versehen.

In diese Durchgangsöffnung ist ein zweites Element 20, nämlich eine drucksteife Hülse, insbesondere eine Spreizhülse, der Einrichtung 1 eingefügt. Die drucksteife Hülse besteht vorzugsweise, ebenso wie die Sandwichplatte 10, aus einem Faserverbundwerkstoff, insbesondere kohlefaserverstärktem Kunststoff (CFK).

Innerhalb der Hülse verlaufen Verbindungselemente 40, 41 in Form von Faserschlaufen. Die Faserschlaufen sind in Öffnungen bzw. Bohrungslöchern 33, welche innerhalb eines Elementenpaares 30 vorgesehen sind, angeordnet und befestigt. Das Elementenpaar 30 weist ein oberes Element 31 und ein unteres Element 32 auf. Die Faserschlaufen sind als endloses Element durch die Öffnungen 33 innerhalb der beiden Elemente 31, 32 gefädelt. Die jeweiligen Enden der Faserschlaufen sind mehrfach umgelenkt beim Durchfädeln durch die Öffnungen 33 und werden dadurch bzw. durch zusätzliches Vorsehen einer Harzverklebung an dem Faserschlaufenmaterial befestigt.

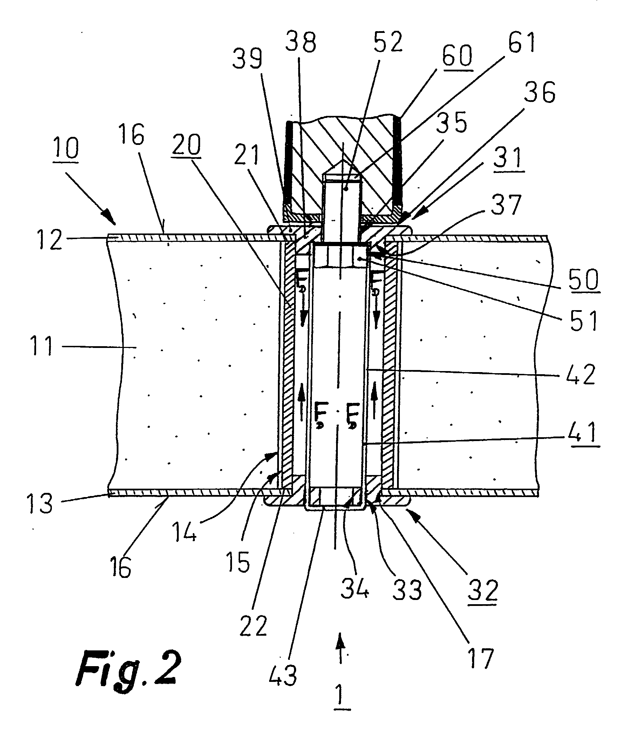

Zum Einleiten einer Kraft in beispielsweise das untere Element 32 ist in dieses eine Befestigungschraube 50 eingefügt. Der Kopf 51 der Befestigungsschraube 50 lagert auf der in das Innere zwischen den beiden Elementen des Elementenpaares 30 gerichteten Seite des Elementes 32, wohingegen der Schraubenschaft 52 nach außen, weg von dem Elementenpaar 30 gerichtet ist. An dem Schaft 52 der Befestigungsschraube 50 kann ein weiteres Element befestigt werden. Dies ist besser Figur 2 zu entnehmen. Beispielsweise kann ein solches Element auch eine Meßeinrichtung zum Prüfen der Sandwichplatte auf Steifigkeit und Festigkeit sein.

**Figur 2** zeigt eine Schnittansicht durch eine Sandwichplatte 10 mit Kernelement 11, oberer Deckschicht 12 und unterer Deckschicht 13 und eine zweite Ausführungsform einer erfindungsgemäßen Einrichtung 1 zum Einleiten einer Kraft.

In die Durchgangsöffnung 14 innerhalb der Sandwichplatte 10 ist in dieser Ausführungsform eine Harzmischung 15 eingefügt. An dieser lagert auf der Innenseite die drucksteife Hülse 20, insbesondere in Ausführungsform einer Spreizhülse, an. Die drucksteife Hülse wird an ihrem oberen Ende 21 sowie an ihrem unteren Ende 22 von der oberen bzw. unteren Deckschicht 12, 13 der Sandwichplatte 10 begrenzt. Zugleich stützt sich die drucksteife Hülse an diesen Deckschichten ab.

Auf der jeweiligen Außenseite 16 der Deckschichten wird entsprechend ein Gegendruck durch daran auflagernde Teilstücke 39 der beiden Elemente 31, 32 des Elementenpaares 30 geschaffen.

Die beiden Elemente 31, 32 des Elementenpaares 30 weisen nämlich ein in die Öffnungen 17 der Deckschichten 12, 13 der Sandwichplatte 10 sowie in die drucksteife Hülse 20 eingreifendes Teilstück 38 sowie ein auf der jeweiligen Außenseite 16 der beiden Deckschichten 12, 13 auflagerndes Teilstück 39 auf. Das auflagernde Teilstück 39 kann, wie in Figur 2 dargestellt, gerundete äußere Kanten aufweisen. Die Dicke dieses Teilstückes 39 ist, ebenso wie die Höhe des in die Deckschichten bzw. in die Hülse eingreifenden Teilstücks 38 auf den jeweiligen Anwendungsfall anpassbar. Vorzugsweise sind die Materialstärken hierbei relativ gering, um eine Gewichtseinsparung zu ermöglichen. Bei größeren in die Sandwichplatte einzuleitenden Kräften jedoch kann es erforderlich sein, das eingreifende Teilstück 38 dicker oder höher auszubilden, als dies in Figur 2 dargestellt ist. Dadurch wird ein sichererer Halt innerhalb der Hülse 20 geschaffen. Zum Verbinden der beiden Elemente 31, 32 des Elementenpaares 30 weisen diese die Öffnungen 33 auf, durch welche beispielhaft die Faserschlaufe 41 gefädelt ist. Zwischen den beiden Elementen 31, 32 bilden die Faserschlaufen jeweils senkrechte Teilstücke 42 aus. Die Faserschlaufen werden durch die Durchgangsöffnungen 33 hindurchgefädelt, auf der jeweiligen Außenseite 36 der beiden Elemente 31, 32 entlanggeführt und durch die zweite Öffnung 33 wieder hindurchgefädelt. Das dabei entstehende Schlaufenteilstück 43 lagert dann auf der Außenseite 36 des Elementes, wo beispielsweise eine Nut zum Einlegen des Schlaufenteilstücks 43 so vorgesehen sein kann, daß die Schlaufen nicht aus der Oberflächenkontur der Elemente 31, 32 herausragen. Durch die etwas verschobene Schnittansicht kann man beim unteren Element 32 das Durchfädeln der Faserschlaufen verdeutlicht erkennen. Anstelle der Öffnung zum Durchfädeln der Faserschlaufen können an den Elementen auch andere Mittel, wie beispielsweise Ösen oder dergleichen angebracht sein. Jedoch sind die Öffnungen weniger aufwendig zu fertigen und störungssicherer.

Das obere Element 31 des Elementenpaares 30 ist hingegen so dargestellt, daß ein Schnitt durch die Befestigungschraube 50 gezeigt ist. Die Befestigungsschraube 50 lagert mit ihrem Kopf 51 auf der Innenseite 37 des oberen Elementes 31 an. Der Schraubenschaft 52 ist durch eine zentrale Innengewinde-Öffnung 35 innerhalb des Elementes 31 geführt bzw. geschraubt. Auf der Außenseite 36 des Elementes 31 ist ein weiteres Element in Form eines Stabelementes 60 aufgefügt. Dieses Element 60 übernimmt die Krafteinleitung in die Sandwichplatte. Zum Verbinden mit der Befestigungsschraube 50 weist das Stabelement 60 vorteilhaft eine zentrale Bohrung 61 auf. Dadurch ist das Stabelement 60 auf die Befestigungsschraube im Bereich von deren Schaft 52 aufgeschraubt.

Das untere Element 32 des Elementenpaares 30 weist lediglich eine zentrale Durchgangsöffnung 34 auf. Diese kann so groß gewählt werden, daß der Kopf 51 der Befestigungsschraube 50 zum Befestigen des Stabelementes 60 durch diese Durchgangsöffnung 34 hindurch paßt. Dies erweist sich als vorteilhaft bei insbesondere dicken Sandwichplatten 10. Anstelle des Vorsehens einer Bohrung mit Innengewinde, wie dies die Innengewinde-Öffnung 35 darstellt, kann auch eine einfache zentrale Durchgangsöffnung 34 beispielsweise mit einer Hülse versehen werden, durch welche die Befestigungsschraube durchgesteckt wird. In diesem Falle hält die Befestigungsschraube innerhalb des Elementes 31 dann jedoch nur, wenn das Stabelement 60 auf deren Schaft 52 aufgeschraubt ist.

Die Faserschlaufen 40, 41 werden so stark angezogen, daß eine Vorspannung zwischen den beiden Elementen 31, 32 des Elementenpaaren 30 entsteht. Es wirken dann innerhalb der Hülse 20 die Vorspannungskräfte F_{D} in Form von Druckkräften, wie diese durch Pfeile in Figur 2 angedeutet sind. Dadurch wird eine solche Verbindung zwischen den beiden Elementen 31, 32 des Elementenpaares 30 geschaffen, daß zum Einleiten der Kraft durch beispielsweise das Stabelemente 60 in die Sandwichplatte lediglich eine kurze Schraube 50 erforderlich ist. Darüber hinaus wird durch das Festziehen der Faserschlaufen gegen die Steifigkeit der drucksteifen Hülse 20, welche sich an der oberen Deckschicht 12 und der unteren Deckschicht 13 der Sandwichplatte abstützt, eine vollständige Einheit geschaffen, welche eine große Tragfähigkeit aufweist. Dadurch ist die Möglichkeit gegeben, auch sehr hohe Lasten in die Faserverbundstruktur in Form der Sandwichplatte einzuleiten. Dabei wird aber zugleich eine Leichtbaustruktur geschaffen, welche insbesondere im Luftfahrt- und Raumfahrtbereich, aber auch beispielsweise in der Fahrzeugtechnik besondere Vorzüge und Vorteile aufweist.

Durch das vorteilhafte Vorsehen von Formschlußelementen, wie dies die Elemente 31, 32 des Elementenpaares 30 sowie die drucksteife Hülse 20 darstellen, sowie das Weglassen von Verklebungen, wie dies bei anderen Ausführungsformen solcher Einrichtung zur Krafteinleitung in beliebige Elemente vorgesehen sein kann, ist eine Ausfallwahrscheinlichkeit der Einrichtung 1 sehr gering. Formschlüssige Verbindungen sind bekanntermaßen weniger anfällig für Störungsausfälle als reibschüssige Verbindungen.

Bei Verwenden einer drucksteifen Hülse 20 als Spreizhülse aus einem Faserverbundwerkstoff ist diese vorzugsweise geschlitzt. Die Durchgangsöffnung 14 wird dabei vorzugsweise geringfügig größer aus dem Kernelement 11 ausgefräst, als dem Durchmesser der zusammengerollten Spreizhülse entsprechen würde. Die geschlitzte Spreizhülse wird zunächst zusammengerollt in die Durchgangsöffnung innerhalb der Sandwichplatte eingefügt zwischen den beiden Deckschichten 12, 13. Dadurch hält die Spreizhülse nach dem Auseinanderspreizen fest in der Durchgangsöffnung innerhalb des Kernelementes. Alternativ zum späteren Aufbringen der beiden Deckschichten 12, 13 kann aber auch die ungünstigere Variante gewählt werden, bei der bereits in der Vorfertigung das Kernelement 11 mit einer größeren Durchgangsöffnung versehen wird als die beiden vor dem Einfügen der Hülse aufgefügten Deckschichten 12, 13. Die Spreizhülse muß dann so weit zusammengerollt werden, daß sie durch eine der Öffnungen 17 innerhalb der Deckschichten 12, 13 hindurch paßt. Die Spreizhülse spreizt sich dann im Bereich des Kernelementes 11 so weit auseinander, daß sie an den dortigen Wandungen der Durchgangsöffnung 14 anlagert.

Vorzugsweise bestehen die beiden Elemente 31, 32 des Elementenpaares 30 aus einem leichten Werkstoff, insbesondere Aluminium. Sie können aber auch aus einem beliebigen anderen metallischen Material gefertigt sein. Ebenso ist es möglich, ein alternatives stabiles Material zu verwenden, beispielsweise einen harten Kunststoff oder ähnliches. Die Faserschlaufen sind vorzugsweise senkrecht zur Ebene der Sandwichplatte angeordnet und weisen vorzugsweise unidirektionale Fasern auf. Dadurch ist besonders das Vorsehen der Vorspannungskräfte in Form von Druckkräften F_{D} möglich. Bevorzugt sind zumindest zwei Schlaufen vorgesehen. Die Deckschichten 12, 13 der Sandwichplatte können beliebige Orientierung ihrer Fasern aufweisen. Das Kernelement kann anstelle der in Figur 1 und 2 dargestellten Form eines Schaumkernes oder ähnlichem auch beispielsweise eine Skelettform aufweisen mit jeweils schräg verlaufenden Wandungen.

Alternativ zum Einleiten einer Kraft in eine Sandwichplatte oder eine andere beliebige Platte kann auch ein beliebig geformtes Element vorgesehen sein, beispielsweise ein dickeres zylinderförmiges Element.

Die Faserschlaufen können innerhalb der Spreizhülse, wie in Figur 2 gezeigt und/oder außerhalb von dieser, wie in Figur 1 gezeigt, angeordnet sein. Ist die Wandungsstärke der Hülse groß genug, könnten die Faserschlaufen prinzipiell auch dann angeordnet sein, obgleich dabei eine Materialschwächung der Hülse auftritt.

### Bezugszeichenliste

- 1: Einrichtung

- 10: Sandwichplatte
erstes Element
- 11: Kernelement
- 12: obere Deckschicht
- 13: untere Deckschicht
- 14: Durchgangsöffnung
- 15: Harzmischung
- 16: Außenseite
- 17: Öffnungen

- 20: drucksteife Hülse / zweites Element
- 21: oberes Ende
- 22: unteres Ende

- 30: Elementenpaar
- 31: Element (oberes)
- 32: Element (unteres)
- 33: Öffnungen / Bohrungslöcher
- 34: zentrale Durchgangsöffnung
- 35: Innengewinde - Öffnung
- 36: Außenseite
- 37: Innenseite
- 38: eingreifendes Teilstück
- 39: auflagerndes Teilstück

- 40: Faserschlaufe / Verbindungselement
- 41: Faserschlaufe / Verbindungselement
- 42: senkrechtes Teilstück
- 43: Schlaufenteilstück

- 50: Befestigungsschraube
- 51: Schaft

- 60: Stabelement / weiteres Element
- 61: zentrale Bohrung

- F_{D}: Vorspannungskräfte / Druckkräfte

## Patentansprüche

1. Einrichtung mit einem ersten, insbesondere mehrschichtigen Element (10),
bei dem ein das erste Element (10) im wesentlichen vollständig durchdringendes zweites drucksteifes Element (20) und ein Elementenpaar (30) vorgesehen sind,
bei dem das zweite Element (20) zwischen dem Elementenpaar (30) angeordnet ist,
**dadurch gekennzeichnet,**
**daß** Verbindungselemente (40, 41) vorgesehen sind, die zwischen dem Elementenpaar (30) und im Bereich innerhalb und/oder außerhalb des zweiten Elementes (20) angeordnet sind,
**daß** die beiden Elemente des Elementenpaares (30) mit Teilflächen jeweils auf den entgegengesetzten Oberflächen des ersten Elementes (10) aufliegen oder benachbart zu diesen Oberflächen angeordnet sind,
**daß** die Verbindungselemente faden- oder bandförmig und zwischen dem Elementenpaar verspannbar oder verspannt sind, und
**daß** die Elemente (31, 32) des Elementenpaares (30) Mittel (33) zum Verbinden mit den Verbindungselementen aufweisen, so daß die Kraft über das zweite Element (20) in das erste Element (10) eingeleitet werden kann.

2. Einrichtung nach Anspruch 1,
**dadurch gekennzeichnet,**
**daß** das zweite Element (20) aus dem gleichen Material wie das erste Element (10) besteht,
**daß** das Elementenpaar (30) aus einem metallischen Material besteht und
**daß** die Verbindungselemente (40, 41) aus dem gleichen Material wie das erste und das zweite Element bestehen.

3. Einrichtung nach Anspruch 2,
**dadurch gekennzeichnet,**
**daß** das erste und das zweite Element (10, 20) sowie die Verbindungselemente (40, 41) aus Faserverbundwerkstoff bestehen.

4. Einrichtung nach einem der vorstehenden Ansprüche,
**dadurch gekennzeichnet,**
**daß** das zweite Element eine drucksteife Hülse ist, welche einen rohrförmigen Raum innerhalb des ersten Elementes umschließt, innerhalb dessen die Verbindungselemente angeordnet sind.

5. Einrichtung nach Anspruch 4,
**dadurch gekennzeichnet,**
**daß** die Hülse (20) eine Spreizhülse ist.

6. Einrichtung nach einem der vorstehenden Ansprüche,
**dadurch gekennzeichnet,**
**daß** die Verbindungselemente Faserschlaufen sind.

7. Einrichtung nach einem der vorstehenden Ansprüche,
**dadurch gekennzeichnet,**
**daß** die Mittel zum Verbinden der Elemente (31, 32) des Elementenpaares (30) Öffnungen (33) zum Durchführen der Verbindungselemente (41, 42) sind.

8. Einrichtung nach einem der vorstehenden Ansprüche,
**dadurch gekennzeichnet,**
**daß** die Elemente (31, 32) des Elementenpaares (30) scheibenförmig und mit einem in das zweite Element (20) eingreifbaren und einem auf der Oberfläche des ersten Elementes (10) auflagerbarem Teilstück (38, 39) versehen sind.

9. Einrichtung nach Anspruch 8,
**dadurch gekennzeichnet,**
**daß** zumindest ein Element des Elementenpaares eine Durchgangsöffnung (34) und/oder ein Innengewinde (35) aufweist.

10. Einrichtung nach Anspruch 9,
**dadurch gekennzeichnet,**
**daß** eines der Elemente des Elementenpaares (30) eine so groß dimensionierte Durchgangsöffnung aufweist, daß ein Kopf einer Befestigungsschraube zum Befestigen eines weiteren Elementes (60) an dem ersten Element hindurchsteckbar ist.

11. Einrichtung nach einem der vorstehenden Ansprüche,
**dadurch gekennzeichnet,**
**daß** das erste Element (10) eine Sandwichplatte aus Faserverbundwerkstoff mit einer oberen und einer unteren Deckschicht (12, 13) sowie einem Kernelement (11) ist.

12. Einrichtung nach Anspruch 11,
**dadurch gekennzeichnet,**
**daß** zum Einleiten einer Kraft in eine dicke Sandwichplatte an lediglich einem Element des Elementenpaares das weitere Element befestigbar und/oder befestigt ist.
